# EUROPEAN PATENT APPLICATION

(11) **EP 2 199 969 A1**
(43) Date of publication of application: **23.06.2010**
(21) Application number: 08172153.2
(22) Date of filing: 18.12.2008
(51) Int. Cl.: G06Q 30/00

(54) **Method to track number of visitors or clicks**

(71) Applicant: Adtraction Marketing AB, 115 30 Stockholm (SE)
(72) Inventor: Bjernvall, Markus, 182 39, Danderyd (SE); Longberg, Christian, 178 91, Munsö (SE)
(74) Representative: Karlsson, Leif Karl Gunnar

(57) **Abstract**

The present invention relates to a method to track the number of visitors or "clicks" originating from any number of designated source websites to one or many target websites, where said source websites are loaded in a web browser executed on a client terminal. The present invention specifically teaches that the source code of any web page on said source websites that potentially contains a hyperlink pointing to a target website comprises a code element which, when executed, enables a controlling unit to be executed by the client terminal as the web page is loaded in the web browser. The controlling unit comprises a list of registered domain names identifying for what target websites the number of visitors or clicks originating from each specific source website is to be tracked. When a click is made on a hyperlink, the controlling unit compares the registered domain name in the URL of said hyperlink with the registered domain names of target websites. If there is a match the controlling unit reports the identity of the source website and the identity of the target website to a central server, which registers one (1) click received by the target website from the source website.

## Description

### Field of invention

The present invention relates to a method to track the number of visitors or "clicks" originating from any number of designated source websites to one or many target websites, where said source websites are loaded in a web browser executed on a client terminal, and where the source code of any web page on said source websites, that potentially contains a hyperlink pointing to a target website, comprises a code element which, when executed, enables a controlling unit to be executed by the client terminal as the web page is loaded in the web browser, which controlling unit comprises a list of registered domain names identifying for what target websites the number of visitors or clicks originating from each specific source website is to be tracked. The present invention also relates to computer program products whereby the inventive method can be realised as a computer readable medium holding the inventive computer program products.

### Description of background art

It is in many situations desirable to accurately determine the number of visitors or clicks that is received by a website from one or many designated source websites. For instance, advertisements on the Internet are often placed on numerous designated source websites with the purpose of leading visitors to a target website. The remuneration paid by the advertiser to the owners of the source websites for publishing advertisements is often a direct function of the number of visitors or clicks obtained by the advertiser through said advertisements. It is therefore important to have an accurate method of tracking the number of visitors or clicks that the target website receives from each source website on which advertisements have been published.

There are a number of known methods to track visitors or clicks from any number of designated source websites to one or many target websites, and a few of these will be described as way of example.

A common method is based on modification of all hyperlinks on the source websites that point to the target websites. The URLs in the hyperlinks that refer to the target websites are replaced by the URL of a tracking server and appended with variables containing, among other things, the URL of the target website and the URL of the source website on which each individual hyperlink resides. When a hyperlink is followed, the visitor's browser is pointed to the tracking server, which extracts and registers the variables appended to the URL and then redirects to the appropriate target website.

A problem with this method is that the number of inbound hyperlinks to the target websites will be reduced, as the hyperlinks on the source websites point to the tracking server rather than to the target websites. Prior to the emergence of search engines, inbound links were originally important as a primary means of web navigation; today their significance lies in search engine optimization since, in addition to rankings by content, many search engines rank pages based on inbound links. Google's description of their PageRank system, for instance, notes that Google interprets a link from page A to page B as a vote, by page A, for page B. Usually, the earlier a website is presented in the search results, or the higher it "ranks", the more searchers will visit that website. Maintaining as many inbound links as possible is therefore of high importance to most website owners.

A further problem with this method is that users are not able to determine the real destination of the hyperlinks leading them to the target websites, as the original URLs have been replaced with the URL of the tracking server. When the cursor hovers over a hyperlink the URL is commonly shown in the status bar of the web browser. Users are often reluctant to follow a hyperlink pointing to an unknown or unexpected tracking server rather than the anticipated target website.

Further, this method will limit the usefulness of any parallel web analytics system on the target websites that relies on the referrer in the HTTP Header, as the referrer will always contain the URL of the tracking server rather than the URLs of the source websites.

Another method is to implement a code element on each possible receiving web page on the target websites with the purpose of extracting the "referrer" from the HTTP Header at each incoming request to load a web page. When loading a web page, the referrer is the URL of the previous web page from which a hyperlink was followed. Thus, by extracting the registered domain name from the referrer, each incoming visitor or click can be attributed to a specific source website.

A problem with this method is that some web browsers give their users the option to turn off referrer headers, and Internet security suites often blank the referrer data due to privacy concerns. Thus, any tracking method that relies on referrer data to determine from what source website a hyperlink was followed will suffer a certain amount of loss, generally estimated to five to ten percent of the total number of visitors or clicks received.

An alternative implementation of this method is to modify the source code on the source websites in order to append an identifying variable, unique for each source website, to the target URL of each hyperlink pointing to a target website. When a hyperlink is followed the identifying variable is thus included in the URL of the receiving web page. The code element on each receiving web page on the target websites extracts this variable in order to identify the source website. A problem with this method is that search engines generally discount the value of inbound links where the URL has been appended with variables. Such links are regarded as less natural and this type of implementation may thus have negative effects, from a search engine perspective, on the number of inbound links to the target websites.

Another known way of tracking the number of visitors or clicks from a number of designated source websites to one or many target websites is to implement a code element on each web page on the source websites that potentially contains a hyperlink pointing to a target website. When the code element is executed it queries a central database server for a list of URLs for which the number of visitors or clicks should be tracked. The code element searches the source code of the web page on which it is located and replaces all hyperlinks pointing to any such URL with hyperlinks pointing to the URL of a tracking server. This tracking server will function as described above. Thereby, even though the hyperlinks in the source code point to the actual target website, the code element will cause the browser to interpret the hyperlinks as pointing to the tracking server.

As search engine web crawlers are allegedly not able to execute or interpret this type of code elements, the number of inbound hyperlinks to the target website, from a search engine perspective, is not negatively affected by this method. However, this may change in the future as search engine web crawlers get increasingly advanced. Further, this method does have the limitation that the referrer in the HTTP Header will contain the URL of the tracking server rather than the URL of the source websites. Also, users are not able to determine the real destination of the hyperlinks pointing to the target websites, as the web browser replaces the original URLs with the URL of the tracking server. Thus, when the cursor hovers over a hyperlink pointing to a target website, the URL of the tracking server will be shown in the status bar of the web browser.

### Summary of the present invention

With the purpose of solving one or more of the problems of the background art, and from the standpoint of the field of invention indicated above, the present invention teaches that the controlling unit monitors every "click event" generated in the web browser on such web pages where the code element has been implemented. When a click is made on a hyperlink, the controlling unit compares the registered domain name in the URL of said hyperlink with the registered domain names of target websites. If there is a match, the controlling unit reports the identity of the source website and the identity of the target website to a central server, which registers one (1) click received by the target website from the source website.

The present invention allows hyperlinks on source websites to point directly to target websites, without the need for redirecting through a tracking server. The invention is able to track visitors or clicks through natural hyperlinks without any variables appended to the URLs or any other modifications such as "onclick" arguments. Thus, the inventive method avoids negative impact on the number of inbound hyperlinks to the target websites as well as allows users to determine the real destination of the hyperlinks. Further, the inventive method is not dependent on the referrer in the HTTP Header; neither does it modify it in any way, leaving it intact for other purposes.

It is proposed that the code element, when executed, requests from the central server that the controlling unit is sent to the client terminal, whereby the controlling unit is received and executed by the client terminal, however, it is also possible that the code element itself comprises the code which, when executed, will generate the controlling unit with the attached list of registered domain names.

The present invention teaches that, if the code element, when executed, requests the controlling unit from the central server, that the request for a controlling unit includes the identity of the source website, and that the central server identifies the source website through the request. The central server holds a unique list for each source website with the registered domain names of all target websites to which the number of visitors or clicks from said source website should be tracked. As the source website has been identified the central server finds the unique list for each specific source website, which list is the list included in the controlling unit that is sent from the central server to the client terminal.

In order to provide an effective way for the controlling unit to identify to what websites the number of visitors or clicks should be tracked it is proposed that the controlling unit verifies the registered domain name in each URL, and that the list only holds the registered domain names of the designated target websites to which the number of visitors or clicks from the source websites is to be tracked.

With the purpose of allowing the controlling unit to start monitoring events in the web browser even before web pages have fully loaded, where for instance it can take time to download and display large images, the present invention proposes that the controlling unit monitors Document Object Model (DOM) events, and that the controlling unit starts its monitoring as soon as the DOM tree for the web page has loaded, rather than waiting for all objects on the web page to be completely loaded.

The present invention proposes that the controlling unit registers an "event listener" in the web browser as soon as the DOM tree has loaded, which event listener monitors every event generated in the web browser on such web pages where the code element has been implemented, and that the controlling unit matches the registered domain name from a "click event" with a list of registered domain names of the target websites whenever a "click event" is registered on a link element (<A>) or an image element (<IMG>).

A controlling unit according to the present invention can be realised in different ways, and one proposed way is that the controlling unit is a client side script. Such a client side script can be written in a programming language that is present at the client terminal, such as JavaScript or Visual Basic, or in a programming language that is supported as a plug-in at the client terminal, such as Java Applet, Flash or Active X.

The central server stores tracking information about visitors or clicks received by the target websites from the designated source websites. This information can be used in different ways. Usually the tracking information is communicated to the owners of said target websites to allow them to identify from what source websites incoming visitors or clicks originate.

It is also possible to communicate the tracking information from the central server to the owners of said source websites. This is particularly interesting if the owners of the target websites give remuneration to the owners of the source websites for such visitors or clicks that are provided from the source websites to the target websites, as it allows the owners of the source websites to verify that the correct remuneration is received.

It is also possible that the owner of the central server gives remuneration to the owners of the source websites for visitors or clicks provided from the source websites to the target websites. Either way it is possible that the owners of the target websites pay the owner of the central server for the service of tracking visitors or clicks to the target websites from the source websites.

The advantages of a method or any computer program product according to the present invention are that hyperlinks on the source websites are allowed to point directly to the target websites, without the need for redirecting through a tracking server. The invention is able to track visitors or clicks through natural hyperlinks without any variables appended to the URLs or any other modifications such as "onclick" arguments. Thus, the inventive method avoids reducing the number of inbound hyperlinks to the target websites as well as allows users to determine the real destination of the hyperlinks. Further, the inventive method is not dependent on the referrer in the HTTP Header; neither does it modify it in any way, leaving it intact for other purposes. The present invention also provides the advantage of a central server that can act as a third party between the owners of the source websites and the owners of the target websites for tracking purposes but also for managing any remuneration that is paid by the owners of the target websites to the owners of the source websites for visitors or clicks received.

### Brief description of the drawings

A method and various computer program products according to the present invention will now be described in detail with reference to the accompanying drawings, in which:
- Figure 1: is a schematic and simplified illustration of a method to track the number of visitors or clicks according to the present invention,
- Figure 2: is a schematic and simplified illustration of how a controlling unit according to the present invention can be generated,
- Figure 3: is a schematic and simplified illustration of how information from tracking can be communicated and how remuneration for generated traffic can be given, and
- Figure 4: is a schematic and simplified illustration of a computer readable medium holding computer program products according to the present invention.

### Description of embodiments as presently preferred

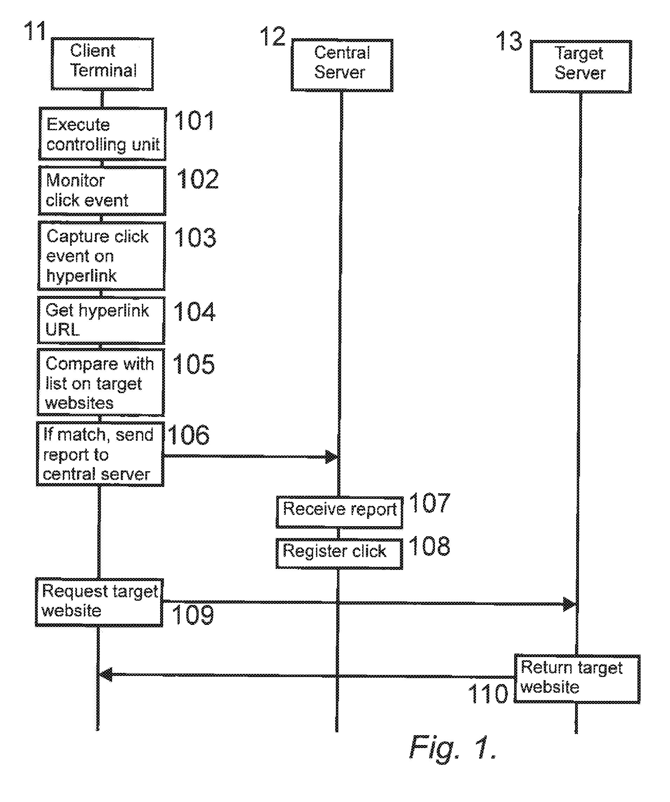

The present invention will now be described with reference to figure 1 illustrating a method to track the number of visitors or clicks from a source website to a target website, the source website being loaded in a web browser executed on a client terminal 11. With the term "client terminal" it should be understood that this can be any kind of terminal where a user will access the Internet through a web browser on the terminal, such as a stationary computer, a mobile laptop, a mobile telephone, a personal digital assistant, or any other device through which Internet access is available.

The source code of the source website comprises a code element which, when executed, will enable a controlling unit to be executed by the client terminal 101 as the source website is loaded in the web browser. This controlling unit comprises a list of the registered domain names of all target websites to which the number of visitors or clicks from the source website is to be tracked.

The present invention specifically teaches that the controlling unit monitors every click event generated in the web browser on the web page from which said controlling unit has been generated on the source website 102 and captures any click on a hyperlink 103. If a click is made on a hyperlink holding an URL then the controlling unit gets this hyperlink URL 104 and extracts the registered domain name, which is then compared with the registered domain names for target websites on the list 105.

If the extracted registered domain name corresponds to a registered domain name in the list, then the controlling unit reports 106 the click, the targeted registered domain name and the identity of the source website to a central server 12. The central server 12 receives the report 107 and registers one (1) click from the source website leading to the target website 108. The client terminal 11 will request 109 the target website from a target server 13, and the target server 13 will return 110 the target website to the client terminal.

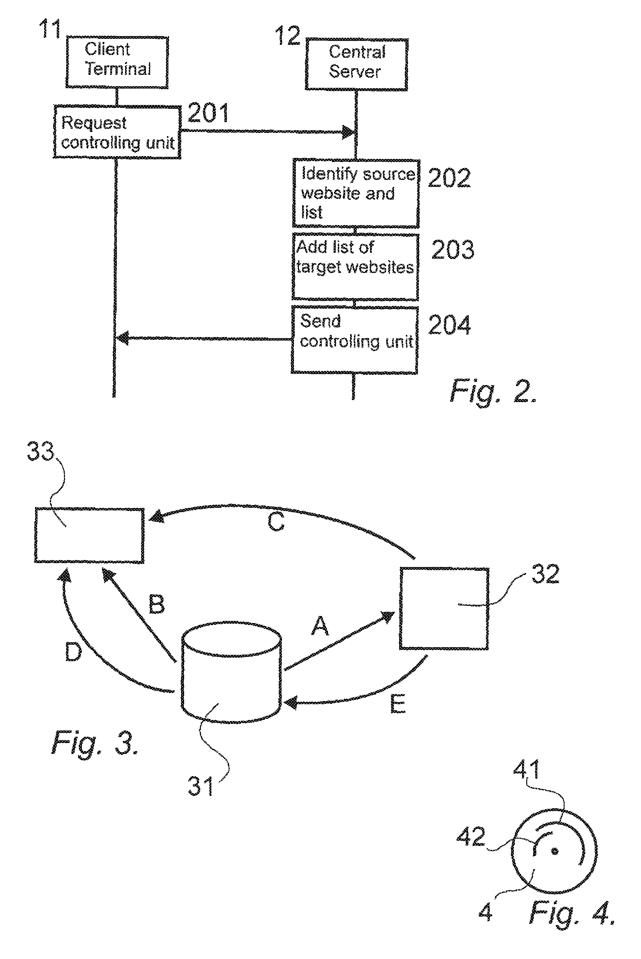

There are different ways of realising the controlling unit. One proposed embodiment, schematically illustrated in figure 2, is that the code element, when executed on the client terminal 11, requests 201 from the central server 12 that the controlling unit is sent to the client terminal 11, whereby the controlling unit is received and executed by the client terminal. This allows for a very short and simple code element with only a request to the central server.

Another possible embodiment would be that the code element comprises code which, when executed, will generate the controlling unit and the comprised list of registered domain names. This will require a more complex code element.

In the case where the code element will request the controlling unit from the central server, it is proposed that the request 201 for a controlling unit includes the identity of the source website from which the request is made, thereby enabling the central server to identify which list to be used with the controlling unit 202. The central server holds a unique list for each source website with the registered domain names of all target websites to which the number of visitors or clicks is to be tracked from the source website, and when the central server has identified the source website, this list can be added to the controlling unit 203 that is sent from the central server to the client terminal 204.

It is also possible that the owner of the source website has an agreement with the owner of the central server that tracking is allowed for any target website without a specific agreement with the owner of respective target website. In this case the central server holds a list with all target websites that are to be tracked from any source website, which list is also included in the controlling unit that is sent from the central server to the client terminal.

The present invention teaches that the controlling unit only verifies the registered domain name of the URL, and that the list only holds the registered domain names of the target websites to which traffic from the source website is to be tracked. By registered domain name is meant that sub domains and names of individual web pages are disregarded in the verification made by the controlling unit.

In order to monitor the events generated in the web browser it is proposed that the controlling unit uses Document Object Model (DOM) events, and that the controlling unit will start its monitoring as soon as the DOM tree for the web page on which the code element is implemented has been loaded.

The controlling unit can do this by registering an event listener in the web browser as soon as the DOM tree has been loaded, which event listener monitors every event generated in the browser on the web page on which the code element has been implemented. When a "click event" is registered on a link element (<A>) or an image element (<IMG>) the controlling unit extracts the registered domain name from the target URL and compares it with the list of registered domain names of target websites for which the number of visitors or clicks is to be tracked.

The controlling unit can be implemented in different ways and one possible implementation is that the controlling unit is a client side script. Such a client side script can be made in a programming language that is present at the client terminal, such as JavaScript or Visual Basic script, or in a programming language that is supported as a plug-in at the client terminal, such as Java Applet, Flash or Active X.

The present invention teaches that the central server stores tracking information on visitors or clicks generated from source websites to target websites, and figure 3 illustrates schematically that tracking information can be communicated A from the central server 31 to an owner of a target website 32. It is also possible to communicate B the tracking information from the central server 31 to an owner of a source website 33.

Remuneration for the visitors or clicks that are generated from the source websites to the target websites can be given in different ways. One possible way is that an owner of a target website 32 gives remuneration C to an owner of a source website 33, another possible way is that the owner of the central server 31 gives remuneration D to an owner of a source website 33 for the traffic that is generated from a source website to a target website. Either way it is proposed that an owner of a target website 32 pays E the owner of the central server 31 for the tracking services.

The code element that is to be included in the source code of the web pages on the source websites can be provided to an owner of a source website in different ways. One possible way is that the code element is provided by the owner of the central server to an owner of a source website, another possible way is that the code element is provided by an owner of a target website to an owner of a source website.

The present invention also relates to two different computer program products schematically illustrated in figure 4. A first computer program product 41 comprises computer program code, which, when executed, enables a computer unit to perform the steps of a central server according to the inventive method, and a second computer program product 42 comprises a code element according to the inventive method. The present invention also relates to a computer readable medium 4 from which computer program code according to the first computer program product 41 or a code element according to the second computer program product 42 can be read. In figure 4 this computer readable medium is schematically illustrated as a compact disc 4, however the inventive computer readable medium can be any medium from which the inventive computer program code or code element can be read, such as a compact disc, a USB-memory or a download page on the Internet.

It will be understood that the invention is not restricted to the aforedescribed and illustrated exemplifying embodiments thereof and that modifications can be made within the scope of the inventive concept as illustrated in the accompanying Claims.

## Claims

1. Method to track the number of visitors or "clicks" originating from any number of designated source websites to one or many target websites, where said source websites are loaded in a web browser executed on a client terminal, and where the source code of any web page on said source websites that potentially contains a hyperlink pointing to one of said target websites comprises a code element which, when executed, enables a controlling unit to be executed by the client terminal as said web page is loaded in the web browser, which controlling unit comprises a list of registered domain names identifying for what target websites the number of visitors or clicks originating from each specific source website is to be tracked, **characterised in, that** said controlling unit monitors every "click event" generated in the web browser on such web pages where the code element has been implemented, that when a click is made on a hyperlink, the controlling unit compares the registered domain name in the URL of said hyperlink with the registered domain names of target websites, that if there is a match the controlling unit reports the identity of the source website and the identity of the target website to a central server, which registers one (1) click received by the target website from the source website.

2. Method according to claim 1, **characterised in, that** said code element, when executed, requests from said central server that said controlling unit is sent to said client terminal, whereby said controlling unit is received and executed by said client terminal.

3. Method according to claim 1, **characterised in, that** said code element comprises code which, when executed, will generate said controlling unit and said list of registered domain names.

4. Method according to claim 2, **characterised in, that** said request for a controlling unit includes the identity of said source website, that said central server identifies said source website, and that said central server holds a unique list for said source website with the registered domain names for all target websites for which the number of visitors or clicks are to be tracked from said source website, which list is the list comprised by said controlling unit that is sent from said central server to said client terminal.

5. Method according to claim 2 or 4, **characterised in, that** said central server holds a list with the registered domain names of all target websites for which the number of visitors or clicks are to be tracked from any designated source website, which list is included in said controlling unit that is sent from said central server to said client terminal.

6. Method according to any preceding claim, **characterised in, that** said controlling unit only verifies the registered domain name in said URL, and that said list only holds the registered domain names of the target websites for which the number of visitors or clicks received from the designated source websites is to be tracked.

7. Method according to any preceding claim, **characterised in, that** said controlling unit uses Document Object Model (DOM) events to monitor the events generated in said web browser on such web page where the code element has been implemented, and that said controlling unit will start its monitoring as soon as the DOM tree for said web page has been loaded.

8. Method according to claim 7, **characterised in, that** said controlling unit registers an event listener in said web browser as soon as said DOM tree has been loaded, that said event listener monitors every event generated in said web browser on such web page where the code element has been implemented, and that said controlling unit matches the registered domain name from the target URL of a "click event" with the registered domain names in said list whenever a "click event" is registered on a link element (<A>) or an image element (<IMG>).

9. Method according to any preceding claim, **characterised in, that** said controlling unit is a client side script.

10. Method according to claim 9, **characterised in, that** said client side script is in a programming language that is present at the client terminal, such as JavaScript or Visual Basic script.

11. Method according to claim 9, **characterised in, that** said client side script is in a programming language that is supported as a plug-in at the client terminal, such as Java Applet, Flash or Active X.

12. A first computer program product, **characterised in, that** said first computer program product comprises computer program code, which, when executed, enables a computer terminal to perform the steps of a central server according to any one of claims 1 to 11.

13. A second computer program product, **characterised in, that** said second computer program product comprises a code element according to claim 1, 2 or 3.

14. A computer readable medium from which computer program code according to claim 12 or a code element according to claim 13 can be read.
